# EUROPEAN PATENT SPECIFICATION

(11) **EP 3 158 673 B1**
(45) Date of publication and mention of the grant of the patent: **16.11.2022**
(21) Application number: 15735755.9
(22) Date of filing: 15.06.2015
(51) Int. Cl.: H04L 1/08

(54) **METHODS AND APPARATUSES FOR REPEATED RADIO BLOCK TRANSMISSION**
VERFAHREN UND VORRICHTUNGEN ZUR WIEDERHOLTEN FUNKBLOCKÜBERTRAGUNG
PROCÉDÉS ET APPAREILS POUR LA TRANSMISSION RÉPÉTÉE DE BLOCS RADIO

(30) Priority: 17.06.2014 US 201462013031 P
(43) Date of publication of application: 26.04.2017
(73) Proprietor: Telefonaktiebolaget LM Ericsson (publ), 164 83 Stockholm (SE)
(72) Inventor: SUNDBERG, Mårten, S-120 53 Årsta (SE); ERIKSSON LÖWENMARK, Stefan, S-179 98 Färentuna (SE)
(74) Representative: Zacco Sweden AB
(86) International application number: PCT/SE2015/050692
(87) International publication number: WO 2015/195031

(56) References cited:
- US-A1- 2011 016 369
- US-A1- 2011 206 018

## Description

### TECHNICAL FIELD

Embodiments herein relate to apparatuses and methods therein for extended coverage. Specifically embodiments herein relate to repeated radio block transmission.

### BACKGROUND

Communication devices such as Mobile Stations (MS) are also known as e.g. User Equipments (UE), mobile terminals, and wireless terminals. Mobile stations are enabled to communicate wirelessly in a cellular communications network or wireless communication system, sometimes also referred to as a cellular radio system or cellular networks. The communication may be performed e.g. between two mobile stations, between a mobile station and a regular telephone and/or between a mobile station and a server via a Radio Access Network (RAN) and possibly one or more core networks, comprised within the cellular communications network.

Examples of wireless communication systems are Long Term Evolution (LTE), Universal Mobile Telecommunications System (UMTS) and Global System for Mobile communications (GSM).

Mobile stations may further be referred to as mobile telephones, cellular telephones, laptops, or tablets with wireless capability, just to mention some further examples. The mobile stations in the present context may be, for example, portable, pocket-storable, hand-held, computer-comprised, or vehicle-mounted mobile devices, enabled to communicate voice and/or data, via the RAN, with another entity, such as another mobile station or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with mobile stations within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

Machine Type Communication (MTC) has in recent years shown to be a growing market segment for cellular technologies, especially for GSM and Enhanced Data Rates for GSM Evolution (EDGE) with its global coverage, ubiquitous connectivity and price competitive devices.

With more and more diverse MTC applications, more and more diverse set of MTC requirements arise. Among these there is a low-end market segment characterized by some or all of the following requirements compared with the current GSM technology:
- Extended coverage
- Long battery life
- Low device complexity
- Large number of connected devices

Today's cellular systems are not always suitable for new applications and devices that follow with MTC and Internet of Things (loT). For example, there is an objective to increase the coverage compared to existing services. In telecommunications, the coverage of a base station, is the geographic area where the base station is able to communicate with wireless devices. Some MTC networks are envisioned to be deployed in extreme coverage circumstances, such as basements of buildings or beneath the ground where radio signals suffer from severe attenuation.

However, a problem lies in impairments in the transmission and/or reception between the base station and the mobile station in that the mobile station is not able to correctly estimate the frequency used by the base station. In this context the frequency used by the base station is the frequency of a radio signal used to transmit data and reception and transmission refers to reception and transmission of radio signals used to transmit data. The intention of the current technology is that the mobile station uses the frequency transmitted by the base station to correct its reception and transmission both in time and frequency. However, there will always be a level of uncertainty in the estimation known as a frequency error, and corresponding time alignment error in time. 3GPP TS

45.010 V11.1.0 specifies the timing accuracy and frequency accuracy of BTS and MS in GSM.

The frequency error causes problems in both the reception and transmission of data in that the signal will be distorted. The problem of frequency error is particularly prominent in extended coverage scenarios. US2011/016369A1 describes a method for improving link budget of a wireless system using fast hybrid automatic repeat request protocol. US2011/206018A1 describes a method of providing acknowledgment information by a first wireless device.

### SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. Current GSM technology makes use of Frequency Division Multiple Access (FDMA) and Time Division Multiple Access (TDMA) techniques to allow multiple users accessing the system, i.e. the wireless communications network. This is for example described in 3GPP TS 45.002 V12.1.0. Carriers, or radio frequency channels, are divided in time, using a TDMA scheme. The TDMA scheme enables different user equipment using a single radio frequency channel to be allocated different times slots. The different user equipment are then able to use the same radio frequency channel without mutual interference. A TimeSlot (TS) is the time that is allocated to a particular user equipment, and a GSM burst is the transmission that is made in this time.

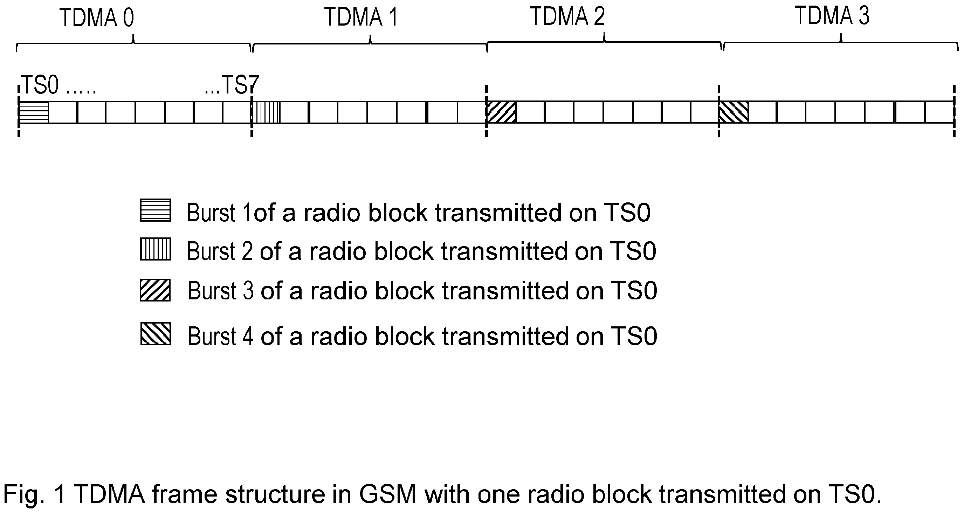

**Figure 1** illustrates the TDMA structure in GSM according to prior art. Digital information which is sent over a radio interface is divided into radio blocks. One radio block comprises several bits which are grouped into 4 bursts when transmitted over the radio interface. The four bursts are transmitted in four consecutive TDMA frames when using Basic Transmission Time Interval (BTTI). In other words, over the TDMA structure, the data is divided into radio blocks, each consisting of four data bursts, transmitted in four consecutive TDMA frames when using BTTI.

The TDMA frame is divided into eight TSs and hence up to eight bursts may be transmitted in the same TDMA frame, and eight radio blocks will be transmitted over four TDMA frames. The eight TSs may be assigned to different user equipment. Thus the eight bursts may be associated with different user equipment. However, in some situations several of the eight bursts may be associated with the same user equipment.

One way to realize extended coverage in GSM is to repeat the information over the TSs of the TDMA frame. After repetitions of the first burst in a first TDMA frame there will be three TDMA frames until the same information is transmitted again. This will increase the frequency error of the signal due to a prolonged transmission time.

Embodiments herein address the issue of frequency error due to prolonged transmission time when using repeated transmissions, for example in order to achieve extended coverage.

In order for the information to be transmitted in a more compact form when using repeated transmissions, minimizing the signal distortion, embodiments herein re-map the radio block structure onto a time frame for multiple access, such as a TDMA frame in GSM, to have bursts carrying the same information to be transmitted as close in time as possible. This is referred to as compact burst mapping herein. This may be applicable for radio blocks being repeated for users in extended coverage.

Thus it is an object of embodiments herein to improve the performance of the wireless communications network by mapping the radio block structure onto time frames for multiple access in an improved way. Such improved mapping extends the coverage of the wireless communications network.

The object is achieved by a method performed by a mobile station for repeated radio block transmission in a wireless communications network capable of time division multiplexing, where the wireless communications network is a Global System for Mobile communications, GSM, network and/or an Enhanced Data Rates for GSM Evolution, EDGE, network.

The mobile station obtains an information about repeated radio block transmission from a network node, wherein the information comprises a burst mapping to be applied by the mobile station in the uplink.

The mobile station maps bits of each burst of data out of four bursts of data comprised in a radio block to be transmitted in uplink, to corresponding two or more assigned Time Slots, TS, in respective two or more consecutive Time Division Multiple Access, TDMA, frames until the number of repetitions used by the mobile station is reached.

The mobile station transmits each burst of data in the respective two or more consecutive TDMA frames in the uplink.

The object is achieved by a mobile station for repeated radio block transmission in a wireless communications network capable of time division multiplexing, wherein the wireless communications network is a Global System for Mobile communications, GSM, network and/or an Enhanced Data Rates for GSM Evolution, EDGE, network. The mobile station is configured to obtain an information about repeated radio block transmission from a network node, wherein the information comprises a burst mapping to be applied by the mobile station in the uplink. The mobile station is configured to map bits of each burst of data out of four bursts of data comprised in a radio block to be transmitted in uplink, to corresponding two or more assigned Time Slots, TS, in respective two or more consecutive Time Division Multiple Access, TDMA, frames until the number of repetitions used by the mobile station is reached.

The mobile station is further configured to transmit each burst of data in the respective two or more consecutive TDMA frames in the uplink.

The object is achieved by a method performed by a network node for repeated radio block transmission in a wireless communications network capable of time division multiplexing, wherein the wireless communications network is a Global System for Mobile communications, GSM, network and/or an Enhanced Data Rates for GSM Evolution, EDGE, network.

The network node transmits an information about repeated radio block transmission to a mobile station. The information about repeated radio block transmission comprises a burst mapping to be expected the mobile station in the downlink.

The burst mapping comprises mapping bits of each burst of data out of four bursts of data comprised in a radio block to be transmitted, to corresponding two or more assigned Time Slots, TS, in respective two or more consecutive Time Division Multiple Access, TDMA, frames. The network node transmits each burst of data, comprised in the radio block, in the respective two or more consecutive TDMA frames in the downlink.

The object is achieved by a network node for repeated radio block transmission in a wireless communications network capable of time division multiplexing, wherein the wireless communications network (400) is a Global System for Mobile communications, GSM, network and/or an Enhanced Data Rates for GSM Evolution, EDGE, network.

The network node is configured to transmit an information about repeated radio block transmission to a mobile station. The information about repeated radio block transmission comprises a burst mapping to be expected by the mobile station in the downlink.

The burst mapping comprises mapping bits of each burst of data out of four bursts of data comprised in a radio block to be transmitted, to corresponding two or more assigned Time Slots, TS, in respective two or more consecutive Time Division Multiple Access, TDMA, frames.

The network node is configured to transmit each burst of data, comprised in the radio block, in the respective two or more consecutive TDMA frames in the downlink.

Since the bits of the burst are mapped to time slots in consecutive time frames the information is transmitted in a more compact way. Thereby the transmission and the reception of the bits are improved and the extended coverage is improved. This also improves the spectral efficiency of the wireless communication network.

Improved transmission and reception result in an improved spectral efficiency due to a reduced BLock Error Rate (BLER). I.e. the same amount of data is transferred with a lower signal to noise and interference ratio.

An advantage with embodiments herein is that they reduce the separation between the first and last burst repetition.

A further advantage is that embodiments herein allow for a higher level of extended coverage compared to current procedures.

A further advantage is that embodiments herein re-map the four bursts of a radio block onto the time frames. Hence there is only impact on the burst mapping, but not for example other procedures related to the construction of the radio block, e.g. channel coding, modulation etc.

### BRIEF DESCRIPTION OF THE DRAWINGS

Examples of embodiments herein are described in more detail with reference to attached drawings in which:
- Figure 1: is a schematic block diagram illustrating the Time Division Multiple Access frame structure in GSM.
- Figure 2: is a schematic block diagram illustrating repeated transmission of a radio block according to prior art.
- Figure 3: is a further schematic block diagram illustrating repeated transmission of a radio block according to prior art.
- Figure 4: is a schematic block diagram illustrating a wireless communications network in which embodiments herein may be implemented.
- Figure 5: is a flowchart illustrating embodiments of a method in a mobile station.
- Figure 6: is a schematic block diagram illustrating embodiments of a method of repeated transmission of a radio block according to embodiments herein.
- Figure 7: is a further schematic block diagram illustrating embodiments of a method of repeated transmission of a radio block according to embodiments herein.
- Figure 8: is a further schematic block diagram illustrating embodiments of a method of repeated transmission of a radio block according to embodiments herein.
- Figure 9: is a flowchart illustrating embodiments of a method in a network node.
- Figure 10: is a schematic block diagram illustrating details of a radio block.
- Figure 11a: is a schematic block diagram illustrating mapping of USF bits according to prior art.
- Figure 11b: is a schematic block diagram illustrating a mapping of USF bits.
- Figure 11c: is a schematic block diagram illustrating a mapping of USF bits according to embodiments herein.
- Figure 12: is a graph illustrating simulation results of burst mapping.
- Figure 13a: is a schematic block diagram illustrating repeated transmission of a radio block related to the simulation in Figure 12.
- Figure 13b: is a schematic block diagram illustrating repeated transmission of a radio block according to embodiments herein and related to the simulation in Figure 12.
- Figure 13c: is a schematic block diagram illustrating repeated transmission of a radio block according to embodiments herein and related to the simulation in Figure 12.
- Figure 14: is a schematic block diagram illustrating a mobile station according to embodiments herein.
- Figure 15: is a schematic block diagram illustrating a network node according to embodiments herein.

### DETAILED DESCRIPTION

As part of developing embodiments herein, a problem will first be identified and discussed.

A frequency error effectively introduces a phase drift in a signal transmitted in a wireless communications network. Provided that the frequency error is fixed the phase drift will linearly increase or decrease as time progresses. A similar drift in phase and amplitude of the signal may be caused by variations in the radio propagation between the transmitter and the receiver due to e.g. movements of the transmitter and/or receiver.

Extending coverage typically involves, in one way or the other, to prolong the transmission time, to allow for more energy to be transmitted per bit.

However, the longer time the signal is transmitted or received the more pronounced is the distortion introduced. Hence, the problem of distortion will be more pronounced when in extended coverage.

GSM will now be used to illustrate the problem further. Time frames for multiple access will be illustrated with TDMA frames herein.

As mentioned above, current GSM technology makes use of FDMA and TDMA techniques to allow multiple users accessing the system. This is for example described in 3GPP Technical Specification 45.002 V12.1.0. Over the TDMA structure, the data is divided into radio blocks, each consisting of four data bursts, transmitted in four consecutive TDMA frames when using Basic Transmission Time Interval, BTTI.

The TDMA frame is divided into eight timeslots (TSs) and hence up to eight bursts may be transmitted in the same TDMA frame, and eight radio blocks will be transmitted over four TDMA frames. Reduced Transmission Time Interval (RTTI) is also supported by the 3GPP Technical Specifications. For RTTI two timeslots and two consecutive TDMA frames are used to transmit the four bursts of a radio block. BTTI transmission is illustrated in Figure 1. Figure 1 illustrates Burst 1 of a radio block transmitted on TSO in TDMA frame 0, referred to as TDMA 0 in Figure 1. Figure 1 further illustrates Burst 2 of a radio block transmitted on TSO in TDMA frame 1, Burst 3 of a radio block transmitted on TSO in TDMA frame 2 and Burst 4 of a radio block transmitted on TSO in TDMA frame 3. TDMA1, TDMA2 and TDMA3 respectively refers to TDMA frame 1, TDMA frame 2 and TDMA frame 3 in Figure 1.

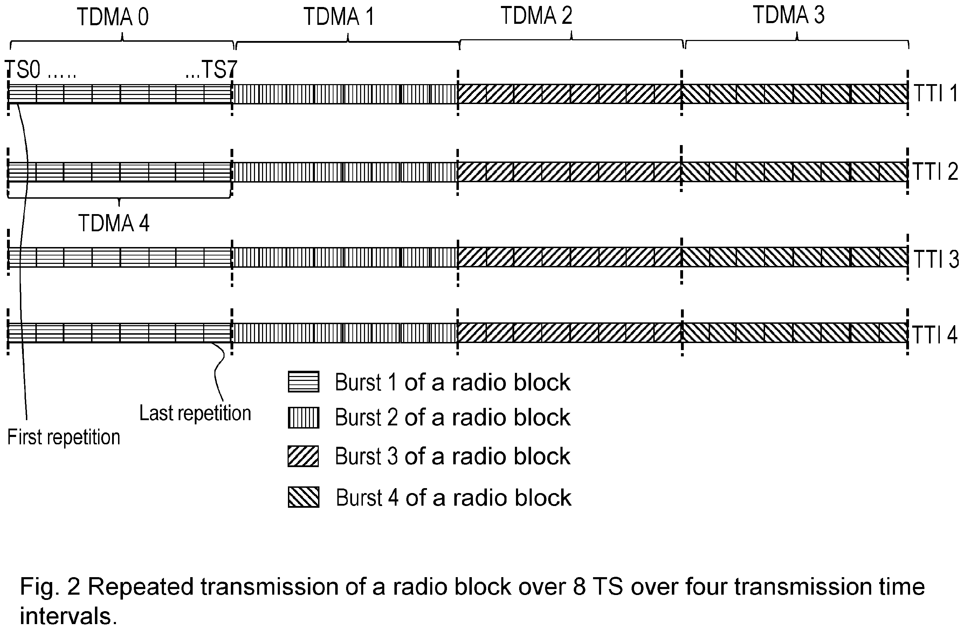

One way to realize extended coverage in GSM is to repeat the information over the TSs of the TDMA frame. This is illustrated in **Figure 2** where the same radio block is repeated over eight TSs over 16 TDMA frames, i.e. four radio block periods or four Transmission Time Intervals (TTI), referred to as TTI1, TTI2, TTI3 and TTI4 in Figure 2. In other words, in Figure 2 four TDMA frames correspond to one radio block period, which corresponds to one TTI.

The first 'row' of TSs, over TDMA frames 0 to 3, will be followed by the second 'row' of TSs, over TDMA frame 4 to 7, etc. TDMA frame 0 is referred to as TDMA 0 etc.

Hence, after the eight repetitions of the first burst in TDMA frame 0 there will be three TDMA frames, TDMA frames 1,2,3, until the same information is transmitted again in TDMA frame 4. In other words, the bursts transmitted in one TDMA frame, such as TDMA 0, may be repeated in consecutive radio block periods. This will increase the distortion of the signal due to the separation of the first and last repetition of the burst. The increased distortion prevents the receiver of the information to effectively combine the different transmissions to extended coverage, i.e. to obtain extended coverage. Due to the long time elapsed between the different transmissions of the bursts, a frequency offset will result in a large phase drift between the different transmissions of the bursts. Direct addition of In-phase/ Quadrature component (I/Q) samples of the received bursts will therefore not be coherent, i.e. not in-phase, and consequently the coverage extension will be lower than with perfectly coherent combining, i.e. combining perfectly in-phase signals. In general coherent combining refers to combining signals taking the phase of the signals into account.

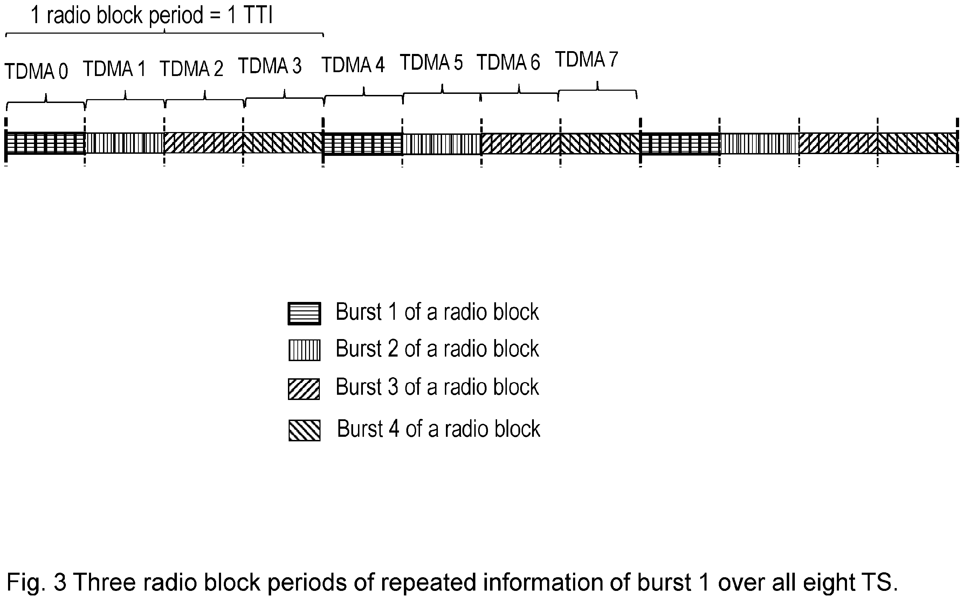

Another illustration is provided in **Figure 3** where the continuous time over TDMA frames is more clearly shown. Figure 3 illustrates three radio block periods of repeated information of burst 1 over all eight TS in a TDMA frame, i.e. in TDMA 0, TDMA 4 and TDMA 8. Burst 2 and 3 are repeated in the same way.

At the same time as extended coverage is required by many of the applications in the low-end segment, they also have properties such as small, infrequent transmissions, and relaxed requirements on data rates, latency and mobility, which may be exploited by embodiments herein.

In order for the information to be transmitted in a more compact form when using repeated transmissions, which minimizes the signal distortion, embodiments herein re-map the radio block structure onto a time frame for multiple access, such as a TDMA frame in GSM, to have bursts carrying the same information be transmitted as close in time as possible. This is referred to as compact burst mapping herein. This may be applicable for radio blocks being repeated for users in extended coverage.

Embodiments herein are illustrated by application to the GSM physical layer, and more specifically to the frame mapping used in GSM.

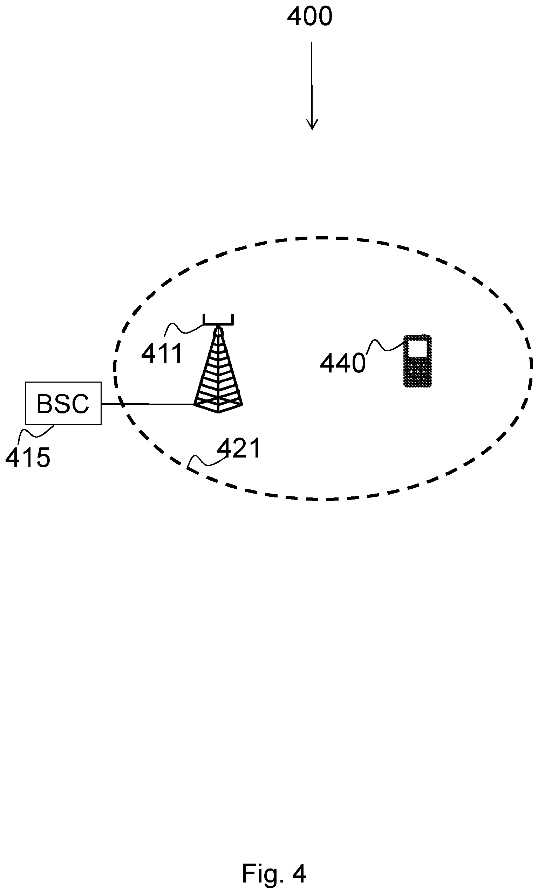

**Figure 4** depicts parts of a **wireless communications network 400** in which embodiments herein may be implemented. The wireless communications network 400 may use a number of different technologies, such as for example GSM, EDGE, LTE, LTE-Advanced or any wireless communications technology capable of time division multiplexing and repeated radio block transmission.

The wireless communication network 400 may also be known as a radio communications network, a telecommunications network or similar. The wireless communication network may comprise one or more RANs and one or more Core Networks (CN).

The wireless communications network 400 comprises a plurality of network nodes, such as BSs and Base Station Controllers (BSC). An example of a base station is a **base station 411,** which may be a Base Transceiver Station (BTS). The base station 411 may also be referred to as an evolved Node B (eNB, eNode B), Access Point Base Station, base station router, or any other network unit capable of communicating with a mobile station within a cell served by the base station 411 depending e.g. on the radio access technology and terminology used.

An example of a BSC is a **BSC 415**. The BSC 415 may control the base station 411.

The base station 411 may serve one or more cells, such as a first cell 421, hereafter referred to as the cell 421.

In embodiments herein the base station 411 and the BSC 415 are referred to as a network node 411, 415. The network node 411, 415 operates within the wireless communications network 400 and may communicate with mobile stations, such as a **mobile station 440,** in the cell 421 served by the base station 411.

A cell is a geographical area where radio coverage is provided by network node equipment such as WiFi AP equipment, base station equipment at a base station site or at remote locations in Remote Radio Units (RRU). The base station 411 is an example of such network node equipment.

The mobile station 440 may e.g. be a mobile terminal or a wireless terminal, a mobile phone, a computer such as e.g. a laptop, a Personal Digital Assistant (PDA) or a tablet computer, sometimes referred to as a surf plate, with wireless capability, or any other radio network unit capable to communicate over a radio link in a wireless communications network.

It should be understood by the person skilled in the art that "mobile station" is a non-limiting term and it refers to any type of wireless device communicating with a radio network node in a cellular or mobile communication system.

Further examples of the mobile station may be Machine Communication (MTC) device, a Device to Device (D2D) terminal, or node, target device, device to device UE, MTC UE or UE capable of machine to machine communication, iPAD, tablet, smart phone, Laptop Embedded equipment (LEE), Laptop Mounted Equipment (LME), USB dongles, sensor, relay, mobile tablets or even a small base station.

In this section, the embodiments herein will be illustrated in more detail by a number of exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

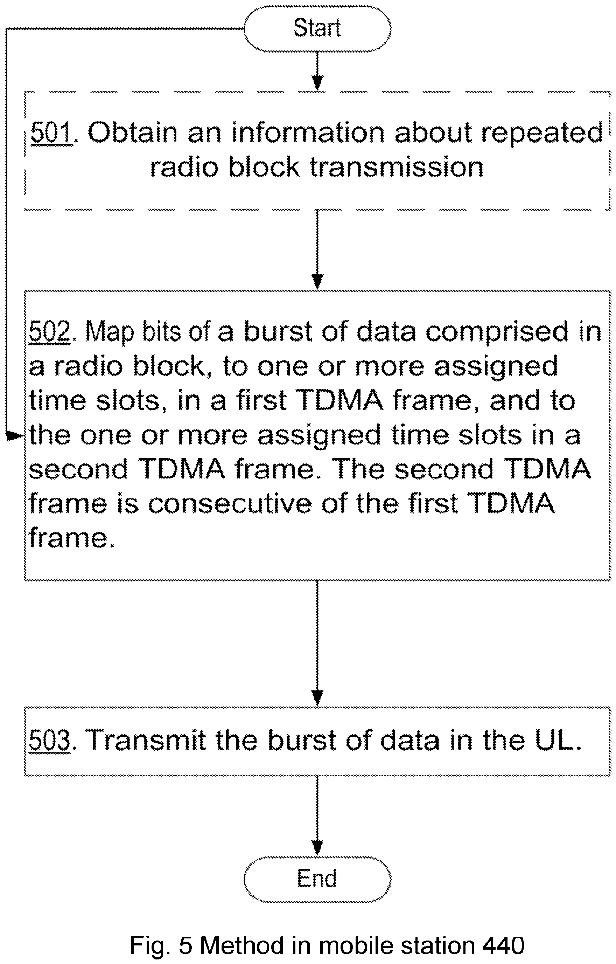

Actions for repeated radio block transmission in a wireless communications network 400 according to the present invention herein will now be described in relation to **Figure 5****.**

**Figure 5** is a flowchart that describes a method performed by the mobile station 440 for repeated radio block transmission according to embodiments herein. The repeated radio block transmission may for example be repeated uplink radio block transmission.

The principle in the following embodiments applies similarly to BTTI as to RTTI. It is 35 only illustrated by the use of BTTI.

Time frames for multiple access will be illustrated with TDMA frames.

### Action 501

In some embodiment, compact mapping is only performed in one of the DL or UL but not in the other. This is especially useful when applied to the UL but not on the DL. In the DL multiple mobile stations in different coverage classes will monitor the same transmitted blocks. The coverage class of a mobile station is determined by the Signal-to-Noise Ratio (SNR) of the received signal and determines how much the SNR needs to be improved by coherent combining of repeated transmissions. For each coverage class a different number of repetitions are used. Hence to allow for decoding of the block after only a sufficient number of blocks repeated the conventional mapping may be useful.

In one embodiment compact burst mapping as disclosed herein is only applied in the uplink and is always applied.

However, to allow for full flexibility the network node 411, 415 may inform the mobile station 440 about use of compact burst mapping in uplink or in downlink.

For this reason, in some embodiments the mobile station 440 obtains an information about repeated radio block transmission from the network node 411, 415.

The information about repeated radio block transmission may comprises a burst mapping to be expected in the downlink, and/or the burst mapping to be applied by the mobile station 440 in the uplink.

### Action 502

In some embodiments the compact burst mapping is done in the UL, in which case the mobile station 440 will, as today, repeat the information over the TSs being assigned and scheduled. In addition the mobile station 440 will continue the repetition of the same burst over the following TDMA frames for the number of repetitions used by the mobile station 440. In other words, the mobile station 440 will continue the repetition of the same burst over the following TDMA frames until the number of repetitions used by the mobile station 440 is reached.

For example, the mobile station 440 is assigned a first time frame TSO and a second time frame TS1, and is assigned to perform 8 repetitions. In this case the mobile station 440 repeats a first burst on TSO and TS1 in the first four TDMA frames before a second burst is being constructed and transmitted over TSO and TS1 in the following four TDMA frames etc.

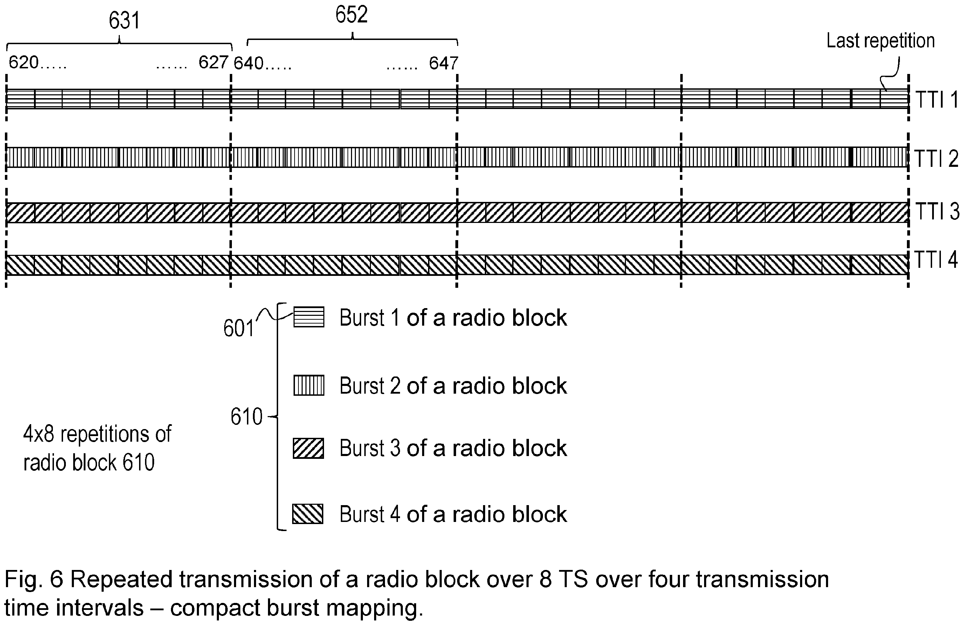

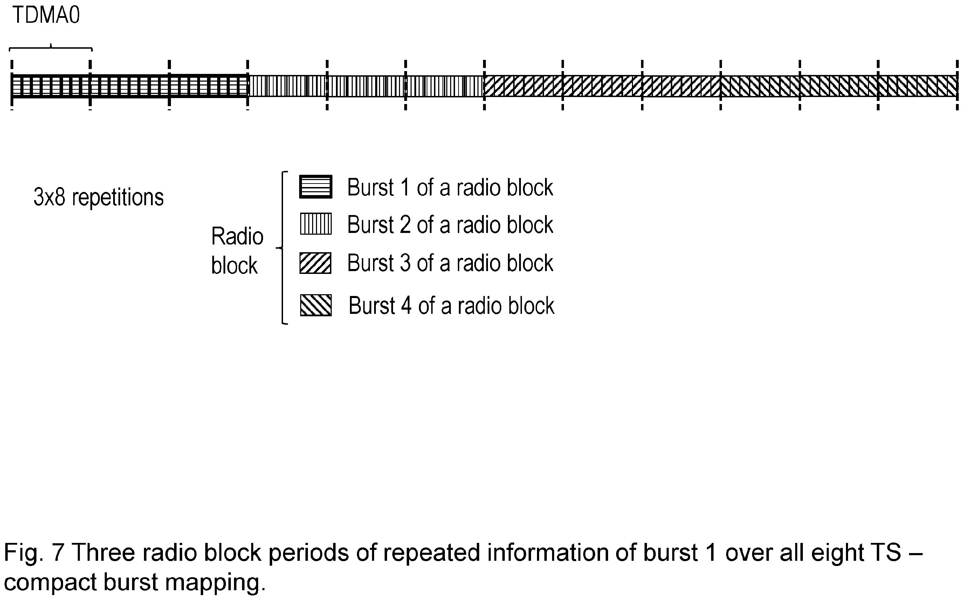

**Figure 6** and **Figure 7** illustrate the present invention of compact burst mapping and are related to Figure 2 and Figure 3. Figure 6 and 7 further illustrate the compact repeated transmission of a burst 601 of a radio block 610 over eight time slots over four transmission time intervals. Figure 6 illustrates the 4x8 repetition embodiment, while Figure 7 illustrates the 3x8 repetition embodiment.

In other words, the mobile station 440 maps bits of the burst 601 of data comprised in the radio block 610, to one or more assigned TSs 620-627 in a first time frame 631 for multiple access, such as a first TDMA frame, and to the one or more assigned TSs 640- 647 in a second time frame 652 for multiple access, such as a second TDMA frame. The second time frame 652 is consecutive of the first time frame 631.

In some embodiments the mobile station 440 maps the bits of the burst 601 of data to the assigned TSs 620-627, 640-647 in consecutive time frames 631, 652 until a number of repetitions used by the mobile station 440 has been reached.

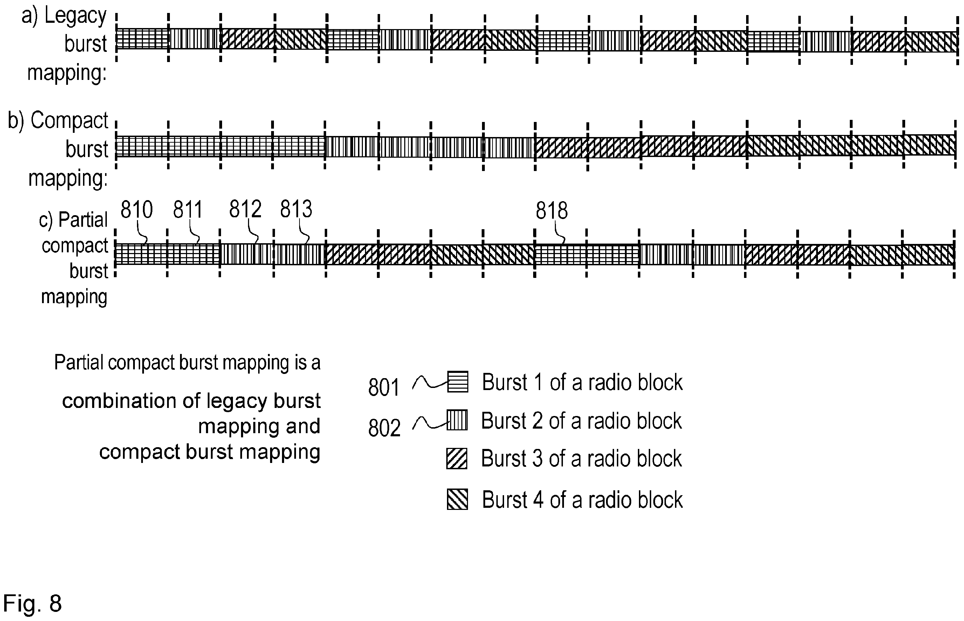

**Figure 8** illustrates a) legacy burst mapping, b) compact burst mapping and c) partial compact burst mapping by combination of legacy burst mapping and compact burst mapping.

In the present invention, partial compact burst mapping is used, the mobile station 440 maps a part of the repetitions of the bits of a first burst 801 of data in consecutive TDMA frames 810, 81 1 to allow mapping of a second burst 802 in consecutive TDMA frames 812, 813 before the rest of the repetitions of the first burst 801 are mapped again. In Figure 8 the first burst 801 is mapped again in TDMA frame 818 after burst 2, burst 3 and burst 4 have been mapped a first time.

In the combination of legacy burst mapping and compact burst mapping the compact burst mapping is applied over two TDMA frames for each burst. Hence in this case the radio block period will in total constitute eight TDMA frames. In the second radio block period, i.e the following eight TDMA frames, the mapping is repeated a second time as per legacy operation of repeating information in consecutive radio block periods.

Using the described compact or partial compact repeated burst mapping the mobile station 440 is able to reduce the separation between the first and last repetition of a burst, which allow for a higher level of extended coverage compared to current procedures. For example, in Figure 6 the first repetition of burst 601 is in TS 620 and the last repetition is in the last TS in the fourth TDMA frame. The last repetition thus arrives 9 TDMA frames earlier than the last repetition in Figure 2.

### Action 503

When the mapping has been performed the mobile station 440 transmits the burst 601 of data in the uplink. i.e. the mobile station 440 transmits the burst 601 of data in the uplink according to the mapping.

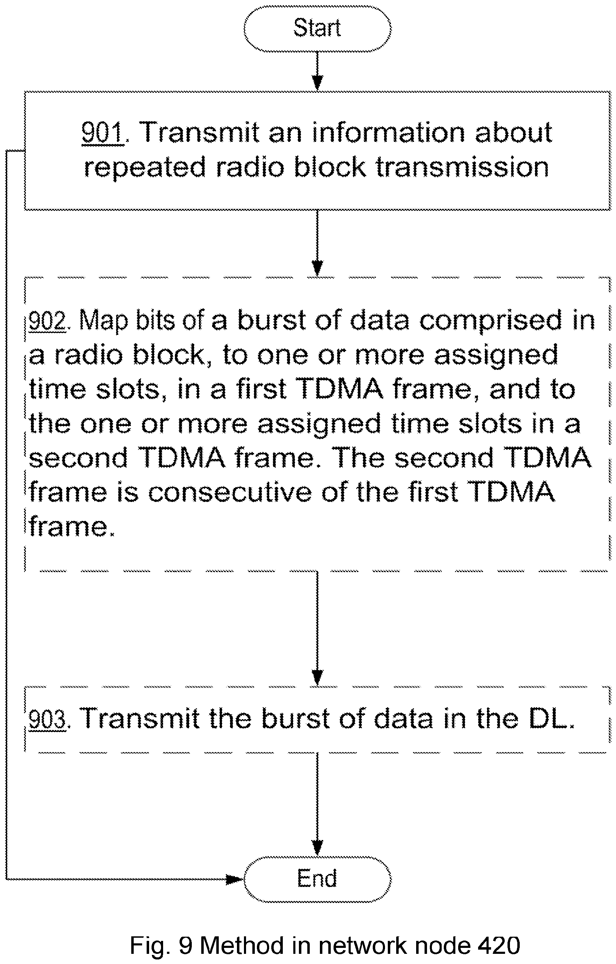

Actions for repeated radio block transmission in a wireless communications network 400 according to embodiments herein will now be described in relation to Figure 9.

Figure 9 is a flowchart that describes a method in the network node 411, 415 for repeated radio block transmission according to the present invention. The repeated radio block transmission may for example be repeated downlink radio block transmission.

Due to the usage of the same TDMA frame structure in the DL and the UL the same principle of mapping applies in the DL as in the UL.

### Action 901

Although performing a compact re-mapping of the burst 601 onto the TDMA frames will provide general improvements of performance due to a minimized distortion of the signal, there are situations where diversity of the radio propagation channel may be exploited by spreading the information transmitted over time. In this case the current burst mapping onto the TDMA frames, the compact burst mapping onto the TDMA frames, or a combination of both may be utilized.

Therefore, in some embodiments a signaling to the mobile station 440 is done where the burst mapping to be expected in the DL, and/or the burst mapping to be applied by the mobile station 440 in the UL is communicated. The signaling may be a signaling from the network node 411, 415, for example from a BSC or a base station. The signaling may for example be Radio Link Control (RLC) signaling and/or Medium Access Control (MAC) signaling as described in 3GPP TS 44.060 V12.1.0. The mapping procedure may be the mapping already in place today, the compact burst mapping as described herein, or a combination of both.

As described above, Figure 8 provides an example where the three mapping options are illustrated.

Thus, in some embodiments the network node 420 transmits an information about repeated radio block transmission to the mobile station 440. The information about repeated radio block transmission comprises the burst mapping to be applied by the mobile station (440) in uplink and/or to be expected in downlink. In other words, the information comprises the burst mapping to be applied when transmitting and/or receiving bursts of data with repeated radio blocks. In the context of signaling the burst mapping to the mobile station 440 the information may of course comprise such information related to the burst mapping which permits the mobile station 440 to determine the burst mapping to be applied by the mobile station 440 in the uplink and/or to be expected in downlink.

Further, for embodiments of compact and/or partial compact burst mapping described herein the burst mapping comprises mapping bits of the burst of data comprised in the radio block 610, to one or more assigned TSs 620-627 in the first time frame 631 for multiple access, and to the one or more assigned TSs 640-647 in the second time frame 652 for multiple access. The second time frame 652 is consecutive of the first time frame 631.

### Action 902

In some embodiments the compact burst mapping is applied to the DL transmission. As mentioned above, due to the usage of the same TDMA frame structure in the DL and UL the same principle of mapping applies in the DL as in the UL.

When the network node 411, 415 applies compact burst mapping in the downlink the network node 411, 415 maps the bits of the burst 601 of data comprised in the radio block 610 to the one or more assigned TSs 620-627 in the first TDMA frame 631, and to the one or more assigned TSs 640-647 in the second TDMA frame 652.

However, the radio block 610 comprises not only dedicated data information to the recipient of the DL data block but also scheduling information, for example scheduling information for the next radio block period in the UL, called Uplink State Flag (USF) bits. In order to support legacy mobile stations not in extended coverage, and hence not making use of repeated transmissions, the USF bits need to be transmitted as for the legacy burst mapping. This however implies that the USF mapping onto the different bursts may need to be re-mapped according to a different mapping than described above. This is exemplified with using Gaussian Minimum Shift Keying (GMSK) modulation, but the same principle applies irrespective of modulation scheme used.

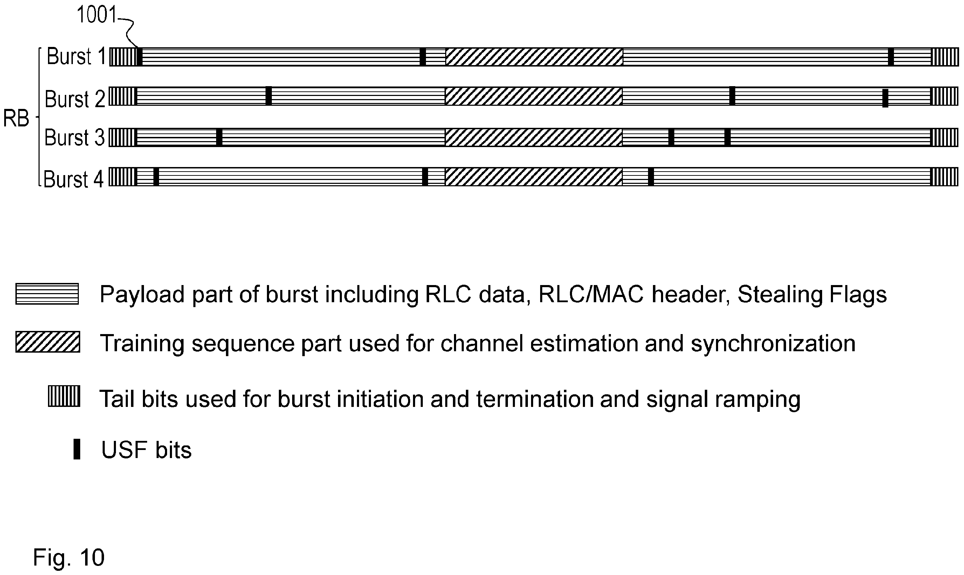

In **Figure 10** the current mapping of the 12 USF bits 1001 sent over the four bursts of a Radio Block (RB) is shown. Figure 10 further illustrates different parts of the bursts. For example, the payload part of a burst including RLC data, RLC/MAC header, Stealing Flags, the training sequence part used for channel estimation and synchronization, the tail bits used for burst initiation and termination and signal ramping and the USF bits 1001.

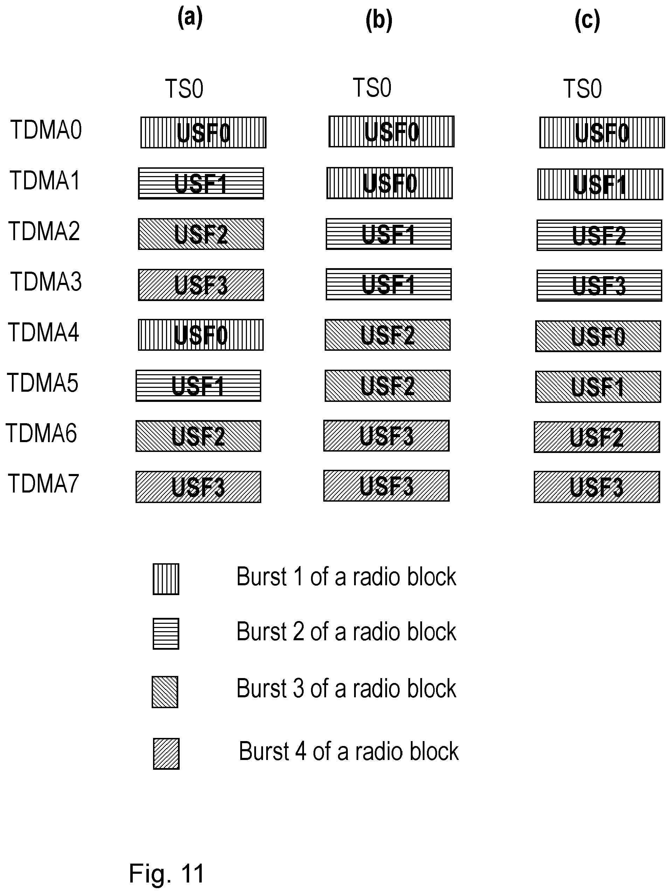

The bits in the different bursts will have different bit states depending on the USF value, a 3 bit USF value is block coded into 12 coded USF bits 1001, and also different bit positions. Hence, in order to have a backwards compatible embodiment the USF bits received in each burst may have the same value and position as for the legacy transmission. **Figure 11** shows (a) the current transmissions of USFs, i.e. USF bits, (b) how the USFs are transmitted when the compact re-mapping is used when using the same mapping of USF bits as for the whole bursts and (c) using a different re-mapping of USF bits and the rest of the burst. The USF bits in each burst, 0 to 3, are denoted USF0, .., USF3. The case illustrated is a transmission of a radio block over one time slot TS0. The radio block is repeated once, i.e. transmitted two times.

The legacy situation is shown in **Figure 11(a)**. Each burst has USF bits in predetermined positions. The exact bit positions depend on the coding scheme used and may easily be derived from 3GPP TS 45.003 V12.1.0. When the compact burst mapping is applied, the USF bits may end up like in **Figure 11(b)**. The USF bits are no longer in their legacy positions. Thus, the legacy mobile stations will not be able to read the USF. To solve this, the bit positions in which the legacy mobile station expects USF bits are "stolen" or overwritten to carry the USF bits even if the rest of the burst is a repetition of another burst. This is illustrated in **Figure 11(c)**.

In some embodiments the compact burst mapping of bursts onto the TDMA frame in the DL comprise of a re-mapping of the fields of the DL block to a compact burst mapping, except for the USF field where another re-mapping, as described above, is performed to maintain the transmission of the USF bits compared to current procedures. The DL block may comprise RLC/MAC header, RLC data, Stealing Flags and Piggybacked Ack/Nack (PAN). These embodiments are applicable to both transmission opportunities of a USF today, i.e. in RTTI USF mode or in BTTI USF mode.

Thus mapping in the context of compact and/or partial compact mapping may comprise mapping the bits of the burst 601 of data comprised in the radio block 610 except bits 1001 associated with scheduling information. In other words, the bits may be all bits, i.e. all bits in the radio block, except the bits belonging to the USF.

Instead the network node 411, 415 may map the bit 1101 associated with scheduling information for the uplink to a bit position in a TDMA frame in which bit position the mobile station 440 expects a bit associated with scheduling information, such as an USF bit.

Thus in this case the bits of the burst of data to be mapped to the one or more assigned TSs in the first TDMA frame 631, and to the one or more assigned TSs in the second TDMA frame 652 do not comprise bits associated with scheduling information for the uplink.

### Action 903

When the method is applied in the downlink the network node 420 transmits the burst of data in the downlink. The burst of data is transmitted according to the mapping.

### Further details of embodiments

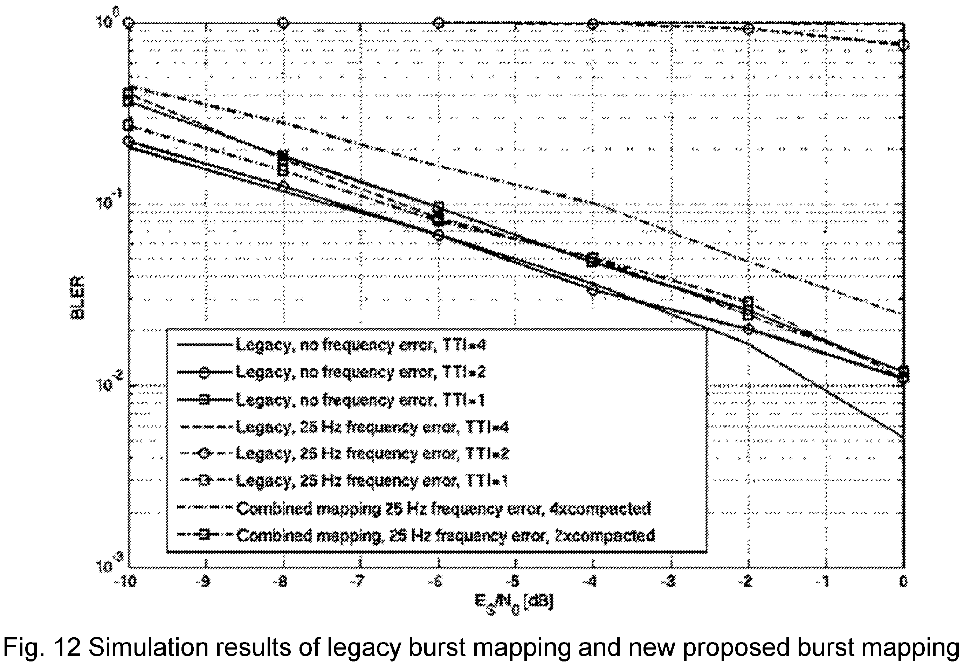

The different embodiments have been simulated and performance results are shown in **Figure 12** together with performance results of legacy mapping. The performance is indicated with the BLock Error Rate (BLER) on the vertical axis as a function of the signal-to-noise ratio Eₛ/N₀.

### Explanation of Figure 12 - Legacy

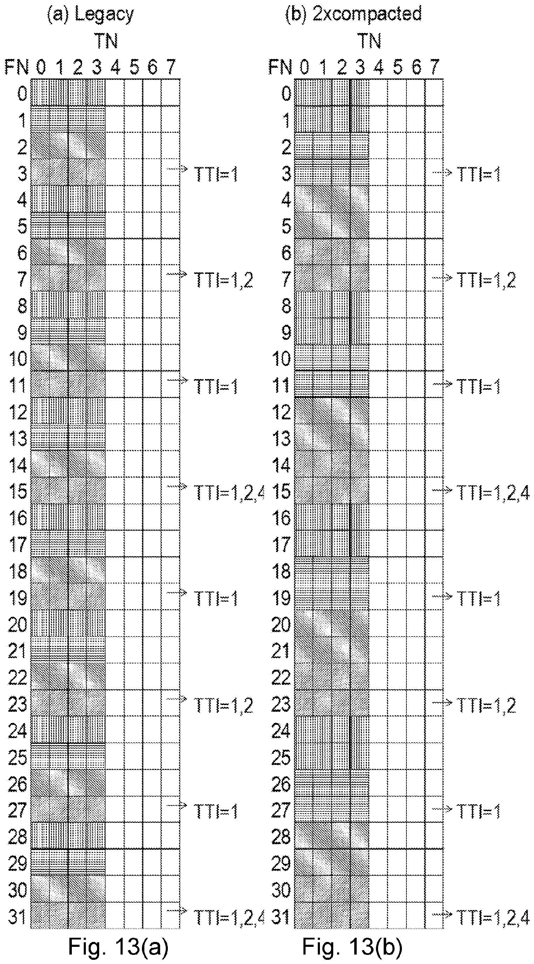

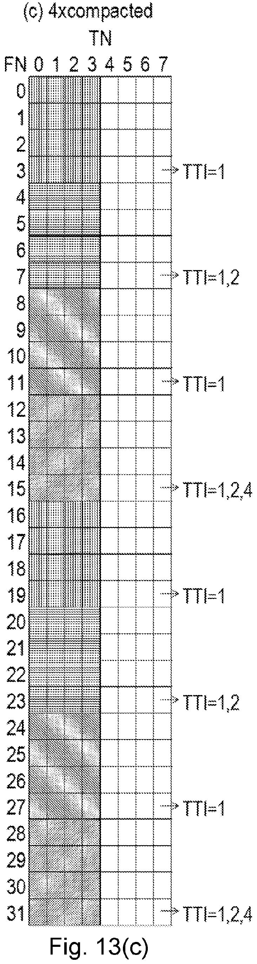

The BLER performance with the legacy reference mapping without any frequency error, i.e. no distortion injected to the signal, is shown with solid lines. This may be considered as a reference performance. The 'TTI' denotation indicates the number of BTTI's that the radio blocks are repeated over before the demodulator in the receiver is called. There are in total 32 repetitions performed in each plot, and hence if a demodulator period consists of less than 32 repetitions, the transmission mapping is repeated until 32 repetitions have been reached. In all plots four TSs have been used within each TDMA frame. The legacy burst mapping for this configuration is illustrated in **Figure 13 (a)**. In Figure 13 FN is the Frame Number, TN is the Time slot Number, and the arrow indicate the point in time when the number of BTTIs that the radio block is repeated over is reached.

After the demodulator is called, a requirement on minimal distortion from frequency error is no longer applicable in-between the demodulation periods, which is the period in which different repetitions are accumulated before the demodulator is called. Still, the requirement on minimal distortion applies within each demodulation period.

To exemplify, in the case of 'TTI=4' for the legacy case, the repetitions are transmitted over 4 TS, which is always the case in the simulations, and 4 TTIs, within each demodulation period. Since this only constitutes 4x4=16 repetitions in total the procedure is repeated one time to reach 32 repetitions in total.

### Explanation of Figure 12 and 13b- Combined mapping

Combined mapping is indicated in Figure 12 with dashed and dash-dotted lines. For the combined mapping 'Nxcompated' denotes the number of TDMA frames, N, that the compact mapping is applied over. If this does not sum up to 32 repetitions in total, the procedure is repeated as per legacy operation.

To exemplify, in the case of '2xcompacted' the repetitions for the first burst is performed over the four TSs over the first two TDMA frames, the second burst over the four TSs, over the following two TDMA frames etc. After repeating the fourth burst, only 8 repetitions have been carried out, and hence the procedure is repeated according to legacy procedures four times. This is illustrated in **Figure 13 (b)****.** **Figure 13 (c)** illustrates the 4xcompacted mapping used in the simulations.

### Explanation of Figure 12 - General

In general Figure 12 shows that it is only one combination of the legacy transmission with frequency error that does not result in extremely high BLER levels. This is the case when the demodulator period only covers one BTTI period, indicated with TTI=1 and dashed line with square markers. Hence the problem identified with a burst spread out in time does not occur. When this occurs, i.e. when the burst is spread out in time as for TTI=2 or TTI=4, the resulting BLER becomes extremely high in the legacy case. The resulting BLER for TTI=2 and legacy transmission with frequency error is illustrated with a dashed line and circles. The corresponding BLER for TTI=4 is illustrated with a dashed line without any marker. This line is above the dashed line with circles representing the TTTI=2 case. This is however not the case when the combined mapping is used. Improved transmission and reception results in an improved spectral efficiency due to a reduced BLER. I.e. the same amount of data is transferred with a lower signal to noise and interference ratio.

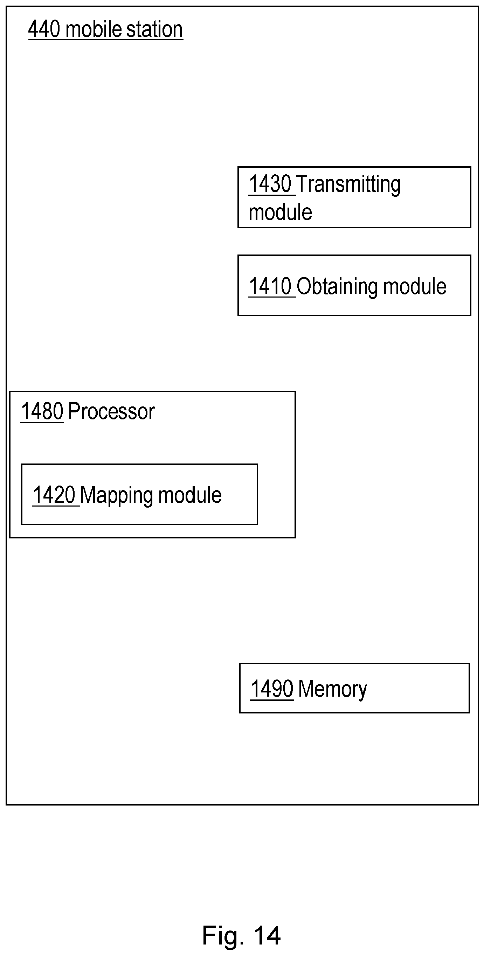

To perform the method actions for repeated radio block transmission in a wireless communications network 400 described above in relation to Figure 5, the mobile station 440 comprises the following arrangement depicted in **Figure 14****.**

The mobile station 440 may be configured to, e.g. by means of an obtaining module 1410 configured to, obtain an information about repeated radio block transmission from the network node 411, 415.

The information about repeated radio block transmission may comprise the burst mapping to be expected in the downlink, and/or the burst mapping to be applied by the mobile station 440 in the uplink.

The obtaining module 1410 may be implemented by a receiver in the mobile station 440.

The mobile station 440 is configured to, e.g. by means of the mapping module 1420 configured to, map bits of the burst 601 of data comprised in the radio block 610, to one or more assigned TSs 620-627 in the first time frame 631 for multiple access, such as the first TDMA frame 631, and to the one or more assigned TSs 640-647 in the second time frame 652 for multiple access, such as the second TDMA frame 632. The second time frame 652 is consecutive of the first time frame 631.

In some embodiments the mobile station 440 is configured to map the bits of the burst 601 of data to the assigned TSs 620-627, 640-647 in consecutive time frames 631, 652 until the number of repetitions used by the mobile station 440 is reached.

The mapping module 1420 may be implemented by **a processor 1480** in the mobile station 440.

The mobile station 440 is further configured to, e.g. by means of the transmitting module 1430 configured to, transmit the burst 601 of data in the uplink. The burst 601 of data is transmitted according to the mapping.

The transmitting module 1430 may be implemented by a transmitter in the mobile station 440.

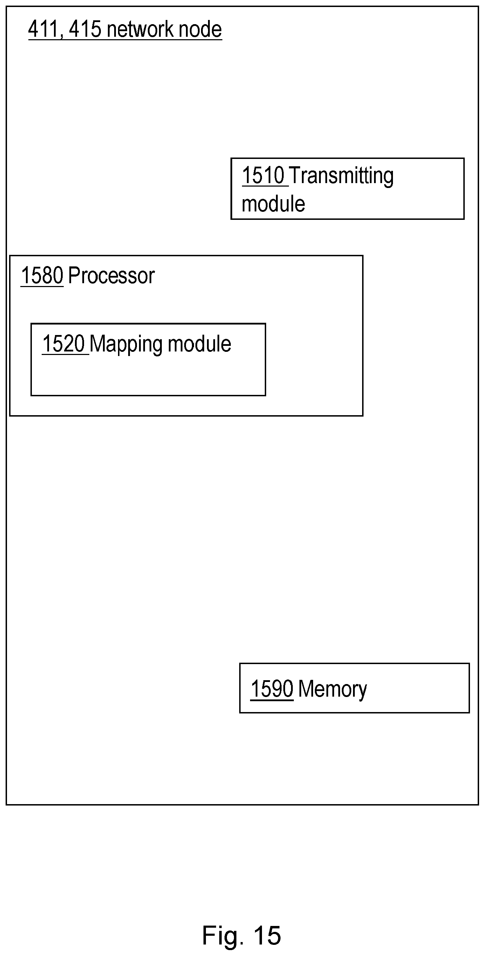

To perform the method actions for repeated radio block transmission in the wireless communications network 400 described above in relation to Figure 5, the network node 411, 415 comprises the following arrangement depicted in **Figure 15****.**

The network node 411, 415 is configured to, e.g. by means of the transmitting module 1510 configured to, transmit the information about repeated radio block transmission to the mobile station 440, which information about repeated radio block transmission comprises the burst mapping to be applied by the mobile station 440 in uplink and/or to be expected in downlink. For embodiments of compact and/or partial compact burst mapping described herein the burst mapping comprises mapping bits of the burst 601 of data comprised in the radio block 610, to one or more assigned TS 620-627 in the first time frame 631 for multiple access, such as the first TDMA frame 631, and to the one or more assigned TSs 640-647 in the second time frame 652 for multiple access, such as the TDMA frame 652. The second time frame 652 is consecutive of the first time frame 631.

The transmitting module 1510 may be implemented by a transmitter in the network node 411, 415.

The network node 411, 415 may be configured to, e.g. by means of the mapping module 1520 configured to, map the bits of the burst of data comprised in the radio block to the one or more assigned TSs in the first TDMA frame 631, and to the one or more assigned TSs in the second TDMA frame 652.

In some embodiments the network node 411, 415 is further configured to map the bits of the burst 601 of data comprised in the radio block 610 except bits 1101 associated with scheduling information, such as USF bits. In these embodiments the network node 411, 415 may be configured to map the bit 1101 associated with scheduling information for the uplink to a bit position in a TDMA frame in which bit position the mobile station 440 expects a bit associated with scheduling information, such as an USF bit.

The mapping module 1520 may be implemented by a **processor 1580** in the network node 411, 415.

The network node 411, 415 may further be configured to, e.g. by means of the transmitting module 1510 configured to, transmit the burst of data in the downlink. The burst of data is transmitted according to the mapping.

The embodiments herein may be implemented through one or more processors, such as the processor 1480 in the mobile station 440 depicted in Figure 14, and **the processor 1580** in the network node 411, 415 depicted in Figure 15, together with computer program code for performing the functions and actions of the embodiments herein. The program code mentioned above may also be provided as a computer program product, for instance in the form of a data carrier carrying computer program code for performing the embodiments herein when being loaded into the network node 411, 415 and the mobile station 440. One such carrier may be in the form of a CD ROM disc. It is however feasible with other data carriers such as a memory stick. The computer program code may furthermore be provided as pure program code on a server and downloaded to the network node 411, 415 and the mobile station 440.

Thus, the methods according to the embodiments described herein for the network node 411, 415 and the mobile station 440 may be implemented by means of a computer program product, comprising instructions, i.e., software code portions, which, when executed on at least one processor, cause the at least one processor to carry out the actions described herein, as performed by the network node 411, 415 and the mobile station 440. The computer program product may be stored on a computer-readable storage medium. The computer-readable storage medium, having stored there on the computer program, may comprise the instructions which, when executed on at least one processor, cause the at least one processor to carry out the actions described herein, as performed by the network node 411, 415 and the mobile station 440. In some embodiments, the computer-readable storage medium may be a non-transitory computer-readable storage medium.

The mobile station 440 and the network node 411, 415 may further each comprise **a memory 1490, 1590** comprising one or more memory units. The memory 1490, 1590 is arranged to be used to store obtained information such as number of repetitions of a radio block, if the burst mapping is legacy, compact or combined and applications etc. to perform the methods herein when being executed in the mobile station 440 and the network node 411, 415.

Those skilled in the art will also appreciate that the different modules described above may refer to a combination of analog and digital circuits, and/or one or more processors configured with software and/or firmware, e.g. stored in the memory, that when executed by the one or more processors, such as the processors in the network node 411, 415 and the mobile station 440, perform as described above. One or more of these processors, as well as the other digital hardware, may be included in a single application-specific integrated circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

Modifications and other embodiments of the disclosed embodiments will come to mind to one skilled in the art having the benefit of the teachings presented in the foregoing descriptions and the associated drawings. Therefore, it is to be understood that the embodiments are not to be limited to the specific embodiments disclosed and that modifications and other embodiments are possible.

Although specific terms may be employed herein, they are used in a generic and descriptive sense only and not for purposes of limitation.

Therefore, the above embodiments should not be taken as limiting the scope, which is defined by the appending claims.

Note that although terminology from GSM has been used in this disclosure to exemplify the embodiments herein, this should not be seen as limiting the scope of the embodiments herein to only the aforementioned system. Other wireless systems capable of time division multiplexing and capable of handling repeated radio block transmission may also benefit from exploiting the ideas covered within this disclosure.

Also note that terminology such as a first burst of data and a second burst of data should be considered to be non-limiting and does in particular not necessarily imply a certain hierarchical relation between the two.

## Claims

1. A method performed by a mobile station (440) for repeated radio block transmission in a wireless communications network (400) capable of time division multiplexing, wherein the wireless communications network (400) is a Global System for Mobile communications, GSM, network and/or an Enhanced Data Rates for GSM Evolution, EDGE, network, the method comprises:
*obtaining* (501) an information about repeated radio block transmission from a network node (411, 415), wherein the information comprises a burst mapping to be applied by the mobile station (440) in the uplink;
*mapping* (502) bits of each burst (601,602,603,604) of data out of four bursts (601,602,603,604) of data comprised in a radio block (610) to be transmitted in uplink, to corresponding two or more assigned Time Slots, TS, in respective two or more consecutive Time Division Multiple Access, TDMA, frames until the number of repetitions used by the mobile station (440) is reached; and
*transmitting* (503) each burst (601,602,603,604) of data in the respective two or more consecutive TDMA frames in the uplink.

2. The method according to claim 1, wherein the information about repeated radio block transmission further comprises the burst mapping to be expected in the downlink.

3. A mobile station (440) for repeated radio block transmission in a wireless communications network (400) capable of time division multiplexing, wherein the wireless communications network (400) is a Global System for Mobile communications, GSM, network and/or an Enhanced Data Rates for GSM Evolution, EDGE, network, wherein the mobile station (440) is configured to:
obtain an information about repeated radio block transmission from a network node (411, 415), wherein the information comprises a burst mapping to be applied by the mobile station (440) in the uplink;
map bits of each burst (601,602,603,604) of data out of four bursts (601,602,603,604) of data comprised in a radio block (610) to be transmitted in uplink, to corresponding two or more assigned Time Slots, TS, in respective two or more consecutive Time Division Multiple Access, TDMA, frames until the number of repetitions used by the mobile station (440) is reached, and
transmit each burst (601,602,603,604) of data in the respective two or more consecutive TDMA frames in the uplink.

4. The mobile station (440) according to claim 1, wherein the information about repeated radio block transmission further comprises the burst mapping to be expected in the downlink.

5. A method performed by a network node (411, 415) for repeated radio block transmission in a wireless communications network (400) capable of time division multiplexing, wherein the wireless communications network (400) is a Global System for Mobile communications, GSM, network and/or an Enhanced Data Rates for GSM Evolution, EDGE, network, the method comprising:
*transmitting* (901) an information about repeated radio block transmission to a mobile station (440), which information about repeated radio block transmission comprises a burst mapping to be expected by the mobile station (440) in downlink, which burst mapping comprises mapping bits of each burst (601,602,603,604) of data out of four bursts (601,602,603,604) of data comprised in a radio block (610) to be transmitted, to corresponding two or more assigned Time Slots, TS, in respective two or more consecutive Time Division Multiple Access, TDMA, frames until the number of repetitions used by the coverage class of the mobile station (440) is reached; and
*transmitting* (903) each burst (601,602,603,604) of data, comprised in the radio block (610), in the respective two or more consecutive TDMA frames in the downlink.

6. The method according to claim 5, further comprising:
*mapping* (902) the bits of each burst (601,602,603,604) of data comprised in the radio block (610) to the corresponding one or more assigned TSs in the respective two or more consecutive Time Division Multiple Access, TDMA, frames.

7. The method according to claim 6, wherein *mapping* (1002) comprises mapping the bits of each burst (601,602,603,604) of data comprised in the radio block (610) except bits associated with scheduling information.

8. The method according to claim 6 or 7, wherein *mapping* (902) further comprises:
mapping a bit (1101) associated with scheduling information for the uplink to a bit position in a time frame for TDMA in which bit position the mobile station (440) expects a bit associated with scheduling information.

9. The method according to any of the claims 7-8, wherein the bits associated with scheduling information for the uplink comprise UpLink State Flag, USF, bits.

10. A network node (411, 415) for repeated radio block transmission in a wireless communications network (400) capable of time division multiplexing, wherein the wireless communications network (400) is a Global System for Mobile communications, GSM, network and/or an Enhanced Data Rates for GSM Evolution, EDGE, network, the network node (411, 415) is configured to:
transmit an information about repeated radio block transmission to a mobile station (440), which information about repeated radio block transmission comprises a burst mapping to be expected by the mobile station (440) in downlink which burst mapping comprises mapping bits of each burst (601,602,603,604) of data out of four bursts (601,602,603,604) of data comprised in a radio block (610) to be transmitted, to corresponding two or more assigned Time Slots, TS, in respective two or more consecutive Time Division Multiple Access, TDMA, frames until the number of repetitions used by the coverage class of the mobile station (440) is reached; and
transmit each burst (601,602,603,604) of data, comprised in the radio block (610), in the respective two or more consecutive TDMA frames in the downlink.

11. The network node (411, 415) according to claim 10, further configured to:
map the bits of each burst (601,602,603,604) of data comprised in the radio block (610) to the corresponding one or more assigned TSs in the respective two or more consecutive Time Division Multiple Access, TDMA, frames.

12. The network node (411, 415) according to claim 11, further configured to map the bits of each burst (601,602,603,604) of data comprised in the radio block (610) except bits (1101) associated with scheduling information.

13. The network node (411, 415) according to claim 11 or 12, further configured to:
map a bit (1101) associated with scheduling information for the uplink to a bit position in a time frame for TDMA in which bit position the mobile station (440) expects a bit associated with scheduling information.

14. The network node (411, 415) according to any of the claims 12-13, wherein the bits associated with scheduling information for the uplink comprise UpLink State Flag, USF, bits.

## Patentansprüche

1. Verfahren, das von einer Mobilstation (440) zur wiederholten Funkblockübertragung in einem drahtlosen Kommunikationsnetz (400) durchgeführt wird, das zum Zeitmultiplexen fähig ist, wobei das drahtlose Kommunikationsnetz (400) ein Global-System-for-Mobile-Communications-Netz, GSM-Netz, und/oder ein Enhanced-Data-Ratesfor-GSM-Evolution-Netz, EDGE-Netz, ist, das Verfahren umfassend:
*Erhalten* (501) einer Information über wiederholte Funkblockübertragung von einem Netzknoten (411, 415), wobei die Information ein Burst-Abbilden umfasst, das von der Mobilstation (440) im Uplink angewendet werden soll;
*Abbilden* (502) von Bits jedes Daten-Bursts (601,602,603,604) aus vier Daten-Bursts (601,602,603,604), die in einem Funkblock (610) umfasst sind, der im Uplink übertragen werden soll, auf entsprechende zwei oder mehr zugewiesene Zeitfenster, TS, in jeweiligen zwei oder mehr aufeinanderfolgenden Zeitmultiplex-Multiple-Access-Frames, TDMA-Frames, bis die Anzahl von Wiederholungen, die von der Mobilstation (440) verwendet wird, erreicht wird; und
*Übertragen* (503) jedes Daten-Bursts (601,602,603,604) in den jeweiligen zwei oder mehr aufeinanderfolgenden TDMA-Frames im Uplink.

2. Verfahren nach Anspruch 1, wobei die Information über wiederholte Funkblockübertragung ferner das Burst-Abbilden umfasst, das im Downlink zu erwarten ist.

3. Mobilstation (440) zur wiederholten Funkblockübertragung in einem drahtlosen Kommunikationsnetz (400), das zum Zeitmultiplexen fähig ist, wobei das drahtlose Kommunikationsnetz (400) ein Global-System-for-Mobile-Communications-Netz, GSM-Netz, und/oder ein Enhanced-Data-Rate-for-GSM-Evolution-Netz, EDGE-Netz, ist, wobei die Mobilstation (440) konfiguriert ist zum:
Erhalten einer Information über wiederholte Funkblockübertragung von einem Netzknoten (411, 415), wobei die Information ein Burst-Abbilden umfasst, das von der Mobilstation (440) im Uplink angewendet werden soll;
Abbilden von Bits jedes Daten-Bursts (601,602,603,604) aus vier Daten-Bursts (601,602,603,604), die in einem Funkblock (610) umfasst sind, der im Uplink übertragen werden soll, auf entsprechende zwei oder mehr zugewiesene Zeitfenster, TS, in jeweiligen zwei oder mehr aufeinanderfolgenden Zeitmultiplex-Multiple-Access-Frames, TDMA-Frames, bis die Anzahl von Wiederholungen, die von der Mobilstation (440) verwendet wird, erreicht wird, und
Übertragen jedes Daten-Bursts (601,602,603,604) in den jeweiligen zwei oder mehr aufeinanderfolgenden TDMA-Frames in dem Uplink.

4. Mobilstation (440) nach Anspruch 1, wobei die Information über wiederholte Funkblockübertragung ferner das Burst-Abbilden umfasst, das im Downlink zu erwarten ist.

5. Verfahren, das von einem Netzknoten (411,415) zur wiederholten Funkblockübertragung in einem drahtlosen Kommunikationsnetz (400) durchgeführt wird, das zum Zeitmultiplexen fähig ist, wobei das drahtlose Kommunikationsnetz (400) ein Global-System-for-Mobile-Communications-Netz, GSM-Netz, und/oder ein Enhanced-Data-Ratesfor-GSM-Evolution-Netz, EDGE-Netz, ist, das Verfahren umfassend:
*Übertragen* (901) einer Information über wiederholte Funkblockübertragung an eine Mobilstation (440), wobei die Information über wiederholte Funkblockübertragung ein Burst-Abbilden umfasst, das von der Mobilstation (440) im Downlink zu erwarten ist, wobei das Burst-Abbilden ein Abbilden von Bits jedes Daten-Bursts (601,602,603,604) aus vier Daten-Bursts (601,602,603,604), die in einem zu übertragenden Funkblock (610) umfasst sind, auf entsprechende zwei oder mehr zugewiesene Zeitfenster, TS, in jeweiligen zwei oder mehr aufeinanderfolgenden Zeitmultiplex-Multiple-Access-Frames, TDMA-Frames, umfasst, bis die Anzahl von Wiederholungen, die von der Abdeckungsklasse der Mobilstation (440) verwendet wird, erreicht wird; und
*Übertragen* (903) jedes Daten-Bursts (601,602,603,604), die in dem Funkblock (610) umfasst sind, in den jeweiligen zwei oder mehr aufeinanderfolgenden TDMA-Frames im Downlink.

6. Verfahren nach Anspruch 5, ferner umfassend:
Abbilden (902) der Bits jedes Daten-Bursts (601,602,603,604), die in dem Funkblock (610) umfasst sind, auf das entsprechende eine oder die mehreren zugewiesenen TSs in den jeweiligen zwei oder mehr aufeinanderfolgenden Zeitmultiplex-Multiple-Access-Frames, TDMA-Frames.

7. Verfahren nach Anspruch 6, wobei ein Abbilden (1002) das Abbilden der Bits jedes Daten-Bursts (601,602,603,604), die in dem Funkblock (610) umfasst sind, umfasst, außer Bits, die Planungsinformationen zugewiesen sind.

8. Verfahren nach den Ansprüchen 6 bis 7, wobei das *Abbilden* (902) ferner umfasst:
Abbilden eines Bits (1101), das Planungsinformationen für den Uplink zugewiesen ist, auf eine Bit-Position in einem Zeit-Frame für TDMA, wobei in dieser Bit-Position die Mobilstation (440) ein Bit erwartet, das Planungsinformationen zugewiesen ist.

9. Verfahren nach einem der Ansprüche 7 bis 8, wobei die Bits, die den Planungsinformationen für den Uplink zugewiesen sind, Uplink-State-Flag-Bits, USF-Bits, umfassen.

10. Netzknoten (411,415) zur wiederholten Funkblockübertragung in einem drahtlosen Kommunikationsnetz (400), das zum Zeitmultiplexen fähig ist, wobei das drahtlose Kommunikationsnetz (400) ein Global-System-for-Mobile-Communications-Netz, GSM-Netz, und/oder ein Enhanced-Data-Rate-for-GSM-Evolution-Netz, EDGE-Netz, ist, wobei der Netzknoten (411, 415) konfiguriert ist zum:
Übertragen einer Information über wiederholte Funkblockübertragung an eine Mobilstation (440), wobei die Information über wiederholte Funkblockübertragung ein Burst-Abbilden umfasst, das von der Mobilstation (440) im Downlink zu erwarten ist, wobei das Burst-Abbilden ein Abbilden von Bits jedes Daten-Bursts (601,602,603,604) aus vier Daten-Bursts (601,602,603,604), die in einem zu übertragenden Funkblock (610) umfasst sind, auf entsprechende zwei oder mehr zugewiesene Zeitfenster, TS, in jeweiligen zwei oder mehr aufeinanderfolgenden Zeitmultiplex-Multiple-Access-Frames, TDMA-Frames, umfasst, bis die Anzahl von Wiederholungen, die von der Abdeckungsklasse der Mobilstation (440) verwendet wird, erreicht wird; und
Übertragen jedes Daten-Bursts (601,602,603,604), das in dem Funkblock (610) umfasst ist, in den jeweiligen zwei oder mehr aufeinanderfolgenden TDMA-Frames im Downlink.

11. Netzknoten (411, 415) nach Anspruch 10, der ferner konfiguriert ist zum:
Abbilden der Bits jedes Daten-Bursts (601,602,603,604), die in dem Funkblock (610) umfasst sind, auf das entsprechende eine oder die mehreren zugewiesenen TSs in den jeweiligen zwei oder mehr aufeinanderfolgenden Zeitmultiplex-Multiple-Access-Frames, TDMA-Frames.

12. Netzknoten (411, 415) nach Anspruch 11, ferner konfiguriert, um die Bits jedes Daten-Bursts (601,602,603,604), die in dem Funkblock (610) umfasst sind, abzubilden, außer Bits (1101), die Planungsinformationen zugewiesen sind.

13. Netzknoten (411,415) nach Anspruch 11 oder 12, ferner konfiguriert zum:
Abbilden eines Bits (1101), das Planungsinformationen für den Uplink zugewiesen ist, auf eine Bit-Position in einem Zeit-Frame für TDMA, wobei in dieser Bit-Position die Mobilstation (440) ein Bit erwartet, das Planungsinformationen zugewiesen ist.

14. Netzknoten (411,415) nach einem der Ansprüche 12 bis 13, wobei die Bits, die den Planungsinformationen für den Uplink zugewiesen sind, Uplink-State-Flag-Bits, USF-Bits, umfassen.

## Revendications

1. Procédé mis en œuvre par une station mobile (440) pour une transmission répétée de blocs radio dans un réseau de communications sans fil (400) capable de multiplexage par répartition dans le temps, dans lequel le réseau de communications sans fil (400) est un réseau de système mondial de communications mobiles, GSM, et/ou un réseau à débits de données améliorés pour évolution GSM, EDGE, le procédé comprend :
*l'obtention* (501) d'informations concernant une transmission répétée de blocs radio depuis un nœud de réseau (411, 415), dans lequel les informations comprennent un mappage de rafales à appliquer par la station mobile (440) dans la liaison montante ;
le *mappage* (502) de bits de chaque rafale (601, 602, 603, 604) de données parmi quatre rafales (601, 602, 603, 604) de données comprises dans un bloc radio (610) à transmettre en liaison montante, à deux créneaux temporels, TS, attribués ou plus correspondants dans deux trames d'accès multiple à division de temps, TDMA, consécutives ou plus respectives jusqu'à ce que le nombre de répétitions utilisées par la station mobile (440) soit atteint ; et
la *transmission* (503) de chaque rafale (601, 602, 603, 604) de données dans les deux trames TDMA consécutives ou plus respectives dans la liaison montante.

2. Procédé selon la revendication 1, dans lequel les informations concernant une transmission répétée de blocs radio comprennent en outre le mappage de rafales à attendre dans la liaison descendante.

3. Station mobile (440) pour une transmission répétée de blocs radio dans un réseau de communications sans fil (400) capable de multiplexage par répartition dans le temps, dans laquelle le réseau de communications sans fil (400) est un réseau de système mondial de communications mobiles, GSM, et/ou un réseau à débits de données améliorés pour évolution GSM, EDGE, dans laquelle la station mobile (440) est configurée pour :
obtenir des informations concernant une transmission répétée de blocs radio depuis un nœud de réseau (411, 415), dans laquelle les informations comprennent un mappage de rafales à appliquer par la station mobile (440) dans la liaison montante ;
mapper des bits de chaque rafale (601, 602, 603, 604) de données parmi quatre rafales (601, 602, 603, 604) de données comprises dans un bloc radio (610) à transmettre en liaison montante, à deux créneaux temporels, TS, attribués ou plus correspondants dans deux trames d'accès multiple à division de temps, TDMA, consécutives ou plus respectives jusqu'à ce que le nombre de répétitions utilisées par la station mobile (440) soit atteint, et
transmettre chaque rafale (601, 602, 603, 604) de données dans les deux trames TDMA consécutives ou plus respectives dans la liaison montante.

4. Station mobile (440) selon la revendication 1, dans laquelle les informations concernant une transmission répétée de blocs radio comprennent en outre le mappage de rafales à attendre dans la liaison descendante.

5. Procédé mis en œuvre par un nœud de réseau (411, 415) pour une transmission répétée de blocs radio dans un réseau de communications sans fil (400) capable de multiplexage par répartition dans le temps, dans lequel le réseau de communications sans fil (400) est un réseau de système mondial de communications mobiles, GSM, et/ou un réseau à débits de données améliorés pour évolution GSM, EDGE, le procédé comprenant :
la *transmission* (901) d'informations concernant une transmission répétée de blocs radio à une station mobile (440), lesquelles informations concernant une transmission répétée de blocs radio comprennent un mappage de rafales à attendre par la station mobile (440) en liaison descendante, lequel mappage de rafales comprend un mappage de bits de chaque rafale (601, 602, 603, 604) de données parmi quatre rafales (601, 602, 603, 604) de données comprises dans un bloc radio (610) à transmettre, à deux créneaux temporels, TS, attribués ou plus correspondants dans deux trames d'accès multiple à division de temps, TDMA, consécutives ou plus respectives jusqu'à ce que le nombre de répétitions utilisées par la classe de couverture de la station mobile (440) soit atteint ; et
la *transmission* (903) de chaque rafale (601, 602, 603, 604) de données, comprise dans le bloc radio (610), dans les deux trames TDMA consécutives ou plus respectives dans la liaison descendante.

6. Procédé selon la revendication 5, comprenant en outre :
le *mappage* (902) des bits de chaque rafale (601, 602, 603, 604) de données comprise dans le bloc radio (610) au ou aux TS attribués correspondants dans les deux trames d'accès multiple à division de temps, TDMA, consécutives ou plus respectives.

7. Procédé selon la revendication 6, dans lequel le *mappage* (1002) comprend un mappage des bits de chaque rafale (601, 602, 603, 604) de données comprise dans le bloc radio (610) à l'exception de bits associés à des informations de planification.

8. Procédé selon la revendication 6 ou 7, dans lequel le *mappage* (902) comprend en outre :
le mappage d'un bit (1101) associé à des informations de planification pour la liaison montante à une position de bit dans une trame de temps pour TDMA, position de bit dans laquelle la station mobile (440) attend un bit associé à des informations de planification.

9. Procédé selon l'une quelconque des revendications 7 à 8, dans lequel les bits associés à des informations de planification pour la liaison montante comprennent des bits d'indicateur d'état de liaison montante, USF.

10. Nœud de réseau (411, 415) pour une transmission répétée de blocs radio dans un réseau de communications sans fil (400) capable de multiplexage par répartition dans le temps, dans lequel le réseau de communications sans fil (400) est un réseau de système mondial de communications mobiles, GSM, et/ou un réseau à débits de données améliorés pour évolution GSM, EDGE, le nœud de réseau (411, 415) est configuré pour :
transmettre des informations concernant une transmission répétée de blocs radio à une station mobile (440), lesquelles informations concernant une transmission répétée de blocs radio comprennent un mappage de rafales à attendre par la station mobile (440) en liaison descendante, lequel mappage de rafales comprend un mappage de bits de chaque rafale (601, 602, 603, 604) de données parmi quatre rafales (601, 602, 603, 604) de données comprises dans un bloc radio (610) à transmettre, à deux créneaux temporels, TS, attribués ou plus correspondants dans deux trames d'accès multiple à division de temps, TDMA, consécutives ou plus respectives jusqu'à ce que le nombre de répétitions utilisées par la classe de couverture de la station mobile (440) soit atteint ; et
transmettre chaque rafale (601, 602, 603, 604) de données, comprise dans le bloc radio (610), dans les deux trames TDMA consécutives ou plus respectives dans la liaison descendante.

11. Nœud de réseau (411, 415) selon la revendication 10, configuré en outre pour :
mapper les bits de chaque rafale (601, 602, 603, 604) de données comprise dans le bloc radio (610) au ou aux TS attribués correspondants dans les deux trames d'accès multiple à division de temps, TDMA, consécutives ou plus respectives.

12. Nœud de réseau (411, 415) selon la revendication 11, configuré en outre pour mapper les bits de chaque rafale (601, 602, 603, 604) de données comprise dans le bloc radio (610) à l'exception de bits (1101) associés à des informations de planification.

13. Nœud de réseau (411, 415) selon la revendication 11 ou 12, configuré en outre pour :
mapper un bit (1101) associé à des informations de planification pour la liaison montante à une position de bit dans une trame de temps pour TDMA, position de bit dans laquelle la station mobile (440) attend un bit associé à des informations de planification.

14. Nœud de réseau (411, 415) selon l'une quelconque des revendications 12 à 13, dans lequel les bits associés à des informations de planification pour la liaison montante comprennent des bits d'indicateur d'état de liaison montante, USF.
